Europäisches Patentamt

(19) European Patent Office

Office européen des brevets

(11) Publication number: **0 208 349 B1**

(12) **EUROPEAN PATENT SPECIFICATION**

(45) Date of publication of patent specification: **13.05.92** (51) Int. Cl.⁵: **F16J 15/12**

(21) Application number: **86200910.7**

(22) Date of filing: **26.05.86**

(54) **Asbestos-free sealing gasket for the cylinder head of an internal combustion engine.**

(30) Priority: **03.06.85 IT 6750885**

(43) Date of publication of application:
**14.01.87 Bulletin 87/03**

(45) Publication of the grant of the patent:
**13.05.92 Bulletin 92/20**

(84) Designated Contracting States:
**AT BE CH DE FR GB LI NL SE**

(56) References cited:
**DE-A- 1 807 963    DE-B- 1 294 102**
**FR-A- 2 013 726    FR-A- 2 319 824**
**GB-A- 2 041 112    US-A- 2 699 349**

(73) Proprietor: **TAKO S.p.A.**
**via Reiss Romoli 122/8**
**I-10148 Torino(IT)**

(72) Inventor: **Leoni, Aldo**
**strada delle Terrazze 61**
**I-10133 Torino(IT)**

(74) Representative: **Spandonari, Carlo**
**corso Re Umberto 56**
**I-10128 Torino(IT)**

Rank Xerox (UK) Business Services
(3.08/2.19/2.0)

## Description

This invention relates to an asbestos-free gasket for the cylinder head of an internal combustion engine. More particularly, this invention is concerned with a cylinder-head gasket that can be substituted for a conventional gasket in engines designed for asbestos-based gaskets, without any changes to the engine. Moreover, if applied to engines of new design, the gasket allows more compact, more lightweight, and therefore also less expensive engines to be designed.

Gaskets conventionally used in the past for sealing the joint between the head and the engine block in internal combustion engines comprise an armature, e.g. a tanged steel sheet or a metal net, which is coated on both sides with a mixture of asbestos and rubber latex, the mixture endowing the gasket with the yield necessary for its operation. Around the combustion chamber the gasket is further provided with rims of sheet steel or sheet copper, in order to prevent burn-outs in spots that are directly touched by the flame. Such rims also have the effect of increasing the specific pressure at the periphery of the cylinders, which is necessary for resisting the high pressures acting on such spots during operation of the engine.

Clearly, however, the pressure acting on the gasket material in the areas immediately surrounding the clamping bolts is greater than in the farther areas, and in such areas the gasket is more compliant than in the rimmed areas around the combustion chambers. By consequence, practically speaking, the distribution of forces decreases as one moves away from the clamping areas. Considering that the magnitude of the average pressures employed is in the order of $200.10^5$ N/m² (200 kg/cm²), and also considering that the rigidity of the facing surfaces is less than infinite, it can be understood that the non-uniform distribution of the clamping pressures not only causes a fluctuation of the clamping pressures from one point to the other of the surface of the clamped gasket, but also causes a deformation of the facing surfaces of the cylinder head and of the engine block. More particularly, such deformation causes defects of circularity in the barrels, the latter taking a shape known as cloverleaf. If the gasket-clamping pressure is reduced in order to decrease the cloverleaf distortion, the sealing afforded by the gasket will be impaired; the same is true if the rigidity of the basket is increased, for the same clamping pressure.

In order to avoid deformation of the cylinder head and the engine block notwithstanding the high clamping loads required far conventional gaskets, both the head and, particularly, the engine block had, up to now, to be made overly strong, thereby accepting the greater weight, bulk and cost caused by such exorbitant ruggedness.

Another well known drawback of the asbestos gaskets is the inherent harmfulness of their material, at least during the manufacturing process, though not during use.

In order to overcome the above problems, FR-A-2 319 824 describes an entirely metallic cylinder head gasket comprising a flat steel body having bores for the combustion chambers and for the bolts, which are all rimmed with copper eyelets. The clamping bolts are then clamped to firm abutment against the metal eyelets, and the slight deformation of the metal eyelets is depended on to provide sealing at the combustion chambers. While such a gasket avoids some of the drawbacks inherent to gaskets having a body made of asbestos, it still requires high clamping pressures in order to cause deformation of the copper eyelets, and the deformation is mainly plastic, with the attendant known disadvantages with respect to the provision of an effective, long-term seal. Moreover, such a gasket cannot be used effectively with cylinder blocks and heads made of aluminium, since the metal eyelets would dent their surfaces and impair the seal when the gasket is replaced. Finally, gaskets having a steel body are necessarily thinner than conventional asbestos gaskets, so that they can only be used with newly designed engines, and not as replacements of conventional, thicker gaskets.

A main object of the invention is therefore to provide an asbestos-free gasket that can provide a seal at lower than ordinary clamping pressures, so that it can be used also with engines having their cylinder head and/or engine block made of aluminium, without damaging the head and without giving rise to barrel deformation.

Another object is to provide the above gasket so that it can be directly substituted for conventional, asbestos-based gaskets, in engines that were designed for the latter.

Still another object is to provide the above gasket so that it allows newly designed engines to be made with a cylinder head and an engine block that are more compact and lightweight, due to the lower clamping pressures, which allow a lower ruggedness of the structure with a reduced deformation.

The invention achieves the above and other objects and advantages, such as they appear from the following disclosure, with a sealing gasket for the cylinder head of an internal combustion engine having the features recited in claim 1.

A preferred embodiment of invention, given by way of nonrestrictive example, will now be described with reference to the annexed drawing, wherein:

Fig. 1 is a cross-section view of a gasket according to the invention;

Figg. 2 and 3 are views of details in cross-section, and on an enlarged scale, showing preferred embodiments of elongated elastic inserts used in the gasket according to the invention.

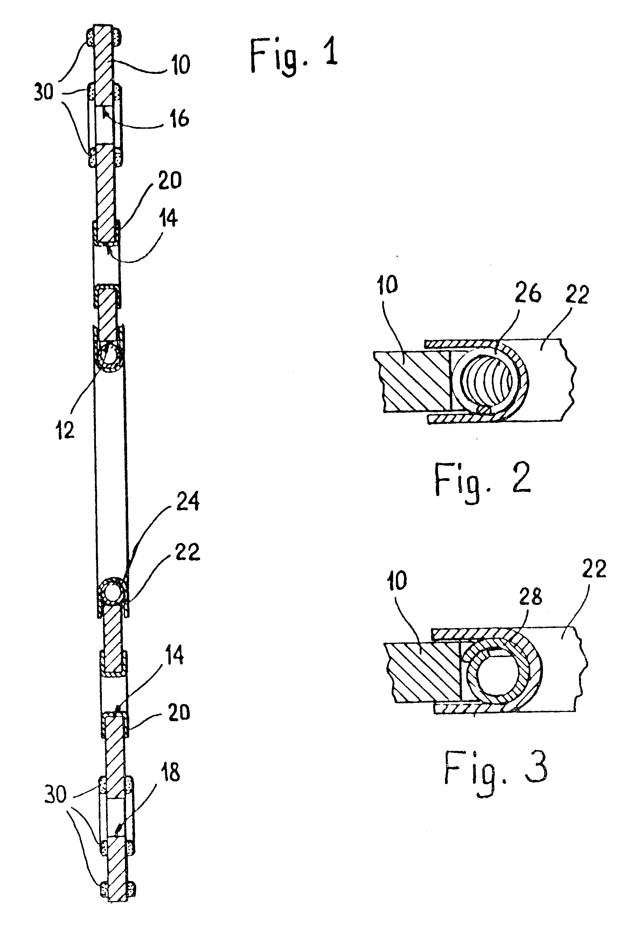

With reference to Fig. 1, the gasket according to the invention comprises an aluminum plate 10, having a uniform thickness, which is comparable to the thickness of a conventional gasket, e.g. about 1.4 mm, and punched in the same pattern and profile of a conventional gasket. Accordingly, plate 10 has bores 12 corresponding to the combustion chambers of the engine (not shown), holes 14 for the clamping bolts (not shown) and ports such as 16, 18 for the passages of oil and/or cooling water. According to the invention, the holes 14 for the clamping bolts are rimmed with sheet steel 20, typically 2/10 mm thick, so that the overall thickness of the gasket around holes 14 is about 1.8 mm. Sheet 20 could also be copper or other malleable metal. Rimming is provided by means of conventional processes used in the gasket field.

The bores 12 for the combustion chambers are also rimmed with a sheet 22 of a material and a thickness similar to sheet 20, and sheet 22 contains, around the periphery of the bore, a steel tube 24, acting as a transversely elastic, elongated insert. Instead of tube 24 a wound spring 26 of steel can be used (Fig. 2), or a coiled sheet 28 (Fig. 3), or a channel-shaped steel sheet (not shown). In the following description and in the claims, the expression "elongated elastic insert" will be used with reference to any of elements 24, 26, 28 or other, as listed above.

The gauge of steel tube 24 (or other elongated elastic insert) should be such that the overall thickness of the gasket around bores 12 be 1/10 or 2/10 mm greater than the thickness at holes 14, e.g. 1.9 mm.

Along the peripheral outline of plate 10 and around the several ports 16, 18 for the passage of fluids such as oil or water, plate 10 has beads such as 30 on both sides, made of soft material such as silicone rubber or other suitable elastomeric material.

When a gasket as described above is mounted in an internal combustion engine in replacement of a conventional gasket, tightening the clamping bolts will bring together the surfaces of the head and of the engine block until the thickness at such places coincides with the preexisting thickness at holes 12, shown as 1.8 mm by way of example, and will not decrease beneath such value, because any further increase of the tightening load will be directly transmitted to the bolting bosses, and will have no influence on the sealing areas and on the deformation of the surfaces of the engine block and the head.

As a consequence of tightening, a deformation of the elongated elastic insert will take place around the combustion chambers, by an exactly predetermined amount, equal to the difference between the thickness (or gauge) of the elongated elastic insert and the thickness of plate 10 (about 3/10 mm in the example of the Figure). Such exactly known deformation, which is independent of the tightening load, will give rise to a purely local sealing pressure, that is adequate to react to the pressures generated within the combustion chamber during engine operation.

In other words, the excess tightening pressure (above the load required for sealing the barrels) is relieved through the spacer provided by the metal sheet rimming the clamping hole. The elastomeric material of beads 30 will be squeezed to contain the moderate pressures existing in such places.

In designing the gasket, it is easy to determine the appropriate gauge or thickness of the elastic insert, depending on its nature, for obtaining a desired pressure near the combustion chambers.

It should be noted that, since the compression stresses upon the gasket are no longer applied to the entire surface of the gasket, bit rather only on the rimmed areas surrounding the combustion chambers and on the elastomeric beads, a lower clamping load applied through the bolts is sufficient, the sealing pressure being equal, and the diameter of the bolts themselves can be reduced.

Among the advantageous features of the gasket according to the invention is that its better heat conductivity with respect to the conventional asbestos-based gasket also improves the efficiency of cooling of the cylinder head.

Preferred embodiments of the invention have been disclosed by way of example, but it is understood that all modifications, changes and adaptations carried out within the teachings of the invention are to be regarded as belonging to its scope. More particularly, the nature of the metals used can be changed, as well as the thicknesses, both of the basic plate and of the rimming sheets or of the elastic inserts.

## Claims

1. A sealing gasket for the cylinder head of an internal combustion engine, comprising a flat metal body (10) having bores (12) corresponding to the combustion chambers of the engine, and bolt holes (14) rimmed with metal sheet, characterized by the combination of the following features:

　　a) the body is an aluminium plate (10) of a uniform thickness;

　　b) the bores (12) have rimmings comprising respective U-shaped steel sheets (22), each containing an elongated elastic insert (24, 26, 28); and

　　c) the overall thickness of each bore rimming (22, 24, 26, 28) at rest is a few tenths of a millimeter (e.g. 1 to 2 tenths of a millimeter) larger than the overall thickness of the gasket at the bolt holes.

2. The sealing gasket of claim 1, characterized in that said elongated elastic insert is a steel tube (24).

3. The sealing gasket of claim 1, characterized in that said elongated elastic insert is a wound steel spring (26).

4. The sealing gasket of claim 1, characterized in that said elongated elastic insert is a longitudinally coiled steel sheet (28).

5. The sealing gasket of claim 1, characterized in that said elongated elastic insert is a channel-shaped steel sheet.

6. The sealing gasket of claim 1, characterized in that said elongated elastic insert is a low-carbon steel wire.

**Revendications**

1. Joint d'étanchéité de culasse de moteur à combustion interne, comprenant une pièce métallique plate (10) ayant des ouvertures (12) correspondant aux chambres de combustion du moteur, et des trous (14) bordés de tôle pour boulons, caractérisé par la combinaison des caractéristiques suivantes:

　　a) la pièce métallique est une plaque d'aluminium (19) d'épaisseur uniforme;

　　b) les ouvertures (12) ont des bordures comprenant des respectifs éléments de tôle (22) pliés en U, chacun contenant un élément élastique allongé (24, 26, 28); et

　　c) l'épaisseur totale au repos de chaque bordure d'ouverture (22, 24, 26, 28) est de quelques dixièmes de millimètre (p. ex. de 1 à 2 dixièmes de millimètre) plus grande que l'épaisseur totale du joint près des trous des boulons.

2. Joint selon la revendication 1, caractérisé en ce que ledit élément élastique allongé est un tube en acier (24).

3. Joint selon la revendication 1, caractérisé en ce que ledit élément élastique allongé est un ressort hélicoïdal en acier (26).

4. Joint selon la revendication 1, caractérisé en ce que ledit élément élastique allongé est une tôle en acier (28) enroulée longitudinalement.

5. Joint selon la revendication 1, caractérisé en ce que ledit élément élastique allongé est une tôle en acier repliée en U.

6. Joint selon la revendication 1, caractérisé en ce que ledit élément élastique allongé est un fil d'acier a bas teneur de carbone.

**Patentansprüche**

1. Zylinderkopfdichtung für Verbrennungsmotoren, mit einem flachen Metallkörper (10), der den Motorverbrennungskammern entsprechende Öffnungen (12) und blechgebördelte Schraubenlöcher (14) aufweist, gekennzeichnet durch die Zusammensetzung folgender Kennzeichen:

　　a) der Körper ist eine gleichdicke Aluminiumplatte (10);

　　b) die Öffnungen (12) haben Bördeln, die je aus einem U-gebogenen Stahlblech (22) bestehen, und je einen länglichen elastischen Einsatz (24, 26, 28) enthalten; und

　　c) die Gesamt-Ruhestärke von jedem Öffnungsbördeln (22, 24, 26, 28) ist einige Zehntel von Millimeter (z. B. 1 bis 2 Zehntel von Millimeter) größer als die Gesamt-Stärke der Dichtung an den Schraubenlöchern.

2. Dichtung nach Anspruch 1, dadurch gekennzeichnet, daß der längliche elastische Einsatz ein Stahlrohr (24) ist.

3. Dichtung nach Anspruch 1, dadurch gekennzeichnet, daß der längliche elastische Einsatz eine Stahlschraubenfeder (26) ist.

4. Dichtung nach Anspruch 1, dadurch gekennzeichnet, daß der längliche elastische Einsatz ein längsverwickeltes Stahlblech (28) ist.

5. Dichtung nach Anspruch 1, dadurch gekennzeichnet, daß der längliche elastische Einsatz ein in Längsrichtung U-gebogenes Stahlblech ist.

**6.** Dichtung nach Anspruch 1, dadurch gekennzeichnet, daß der längliche elastische Einsatz eine Draht von niedriggekohltem Flusstahl ist.

Fig. 1

Fig. 2

Fig. 3